# EUROPÄISCHE PATENTSCHRIFT

(11) **EP 1 512 128 B1**
(45) Veröffentlichungstag und Bekanntmachung des Hinweises auf die Patenterteilung: **03.01.2007**
(21) Anmeldenummer: 03759817.4
(22) Anmeldetag: 27.05.2003
(51) Int. Cl.: G08G 1/0962, G08G 1/0965, G08G 1/0968, G01C 21/34

(54) **NAVIGATIONSSYSTEM FUER EIN FAHRZEUG**
NAVIGATION SYSTEM FOR A VEHICLE
SYSTEME DE NAVIGATION POUR VEHICULE

(30) Priorität: 12.06.2002 DE 10226084
(43) Veröffentlichungstag der Anmeldung: 09.03.2005
(73) Patentinhaber: SIEMENS AKTIENGESELLSCHAFT, 80333 München (DE)
(72) Erfinder: WOLF, Jürgen, 78048 Villingen-Schwenningen (DE)
(86) Internationale Anmeldenummer: PCT/DE2003/001722
(87) Internationale Veröffentlichungsnummer: WO 2003/107301

(56) Entgegenhaltungen:
- WO-A-03/060429
- DE-A- 4 034 681
- DE-A- 19 903 909

## Beschreibung

Die vorliegende Erfindung betrifft ein Navigationssystem für ein Fahrzeug umfassend eine Auswerteeinheit zur Erfassung und Aufbereitung von Fahrzeugdaten und/oder topographischen Daten, eine Übermittlungseinheit, die mit der Auswerteeinheit gekoppelt ist, zur Übermittlung der von der Auswerteeinheit erfassten oder davon abgeleiteten Daten an Navigationssysteme in weiteren Fahrzeugen, eine Empfangseinheit zum Empfang von Fahrzeugdaten und/oder topographischen Daten oder davon abgeleiteten Daten von Navigationssystemen in weiteren Fahrzeugen, eine Verarbeitungseinheit, die mit der Empfangseinheit zur Verknüpfung und Aufbereitung der von den Navigationssystemen in weiteren Fahrzeugen bereitgestellten Daten gekoppelt ist, und eine Ausgabeeinheit zur Ausgabe der verknüpften und aufbereiteten Daten, die mit der Verarbeitungseinheit gekoppelt ist.

Navigationssysteme dienen üblicherweise dazu, dem Fahrer eines Kraftfahrzeuges den Fahrweg von einem Startpunkt zu einem Zielpunkt zu weisen. Dabei ist in dem Navigationssystem normalerweise eine elektronische Landkarte hinterlegt. Außerdem sind Mittel vorgesehen, um stets die aktuelle Position des Fahrzeugs zu ermitteln. Hierfür ist normalerweise ein GPS (Global Positioning System) im Fahrzeug eingebaut.

Um bei der Routenplanung auf aktuelle Ereignisse reagieren zu können, wie beispielsweise auf Baustellen, Stauinformationen, Unfälle et cetera, ist es sinnvoll, das Navigationssystem im Kraftfahrzeug mit derartigen, aktuellen Stauinformationen zu versorgen. Hierfür können, beispielsweise über das Autoradio, aktuelle Stauinformation in digitalisierter Form von einer Rundfunkstation empfangen und in das Navigationssystem eingespeist werden.

Um Informationen über den aktuellen Verkehrsfluss zu erhalten, ist es möglich, stationäre Staumelder einzusetzen. Diese stationären Staumelder sind beispielsweise an Autobahnbrücken befestigt. Die so gewonnenen Stau-Informationen werden gesammelt und in das Navigationssystem des Fahrzeuges eingegeben. Unter wirtschaftlichen Gesichtspunkten wird man derartige, stationäre Staumelder aber nur an ohnehin staugefährdeten Standorten oder entlang dicht befahrener Streckenabschnitte des Autobahnnetzes aufstellen.

Der wesentliche Nachteil derartiger Systeme ist, dass dünnbesiedelte oder infrastrukturell schwache Gegenden, beispielsweise in Entwicklungsländern, unter Einbeziehung von Kostenaspekten nicht mit stationären Staumeldernetzen ausgerüstet werden können.

Die DE-4034681-A1 offenbart dazu ein System zur Übertragung von Verkehrs- bzw. Betriebsinformationen zwischen Fahrzeugen, bei dem jedes Fahrzeug wenigstens die Fahrgeschwindigkeit und den Ort des eigenen Fahrzeugs und Orte anderer Fahrzeuge aufzeichnet und an andere vorbeifahrende Fahrzeuge aussendet. Gleichzeitig empfängt das System von den vorbeifahrenden Fahrzeugen Informationen, verarbeitet diese und stellt die verarbeiteten Informationen auf einer Anzeigeeinrichtung dar.

Die DE-19903909-A1 beschreibt ein Verfahren zur dynamischen Gewinnung von relevanten verkehrsinformationen und zur Optimierung einer Route eines Fahrzeugs, bei dem auf Basis von fahrzeugeigenen Sensoren Daten erstellt und versendet sowie die Daten anderer Fahrzeuge empfangen werden. Daten anderer Fahrzeuge können gezielt angefragt werden.

Aufgabe der vorliegenden Erfindung ist es, ein Navigationssystem für ein Fahrzeug anzugeben, welches unabhängig vom Vorhandensein stationärer Staumeldesysteme arbeitet, mit geringem Aufwand realisierbar ist und den Fahrer mit aktuellen Verkehrs- oder Straßeninformationen versorgen kann.

Erfindungsgemäß wird die Aufgabe gelöst durch ein Navigationssystem der eingangs genannten Art, bei dem die Auswerteeinheit je einem zurückgelegten Weg-Intervall einen Zahlenwert zuordnet, der die aktuellen Verkehrsbedingüngen auf diesem Weg-Intervall repräsentiert, wobei ein positiver Zahlenwert einer gut befahrbaren Strecke entspricht und ein negativer Zahlenwert schlechte Verkehrsbedingungen bedeutet.

Auf diese Weise wird die an andere Navigationssysteme zu übermittelnde Datenmenge reduziert.

Unter Fahrzeugdaten und/oder topographischen Daten sind solche Daten verstanden, die einen Informationsgehalt haben, der für andere Fahrzeuge oder Fahrzeugführer bei der Routenplanung von Bedeutung ist. Diese Daten sind demnach von der aktuell zurückgelegten Strecke und/oder den dortigen Verkehrsoder Umweltbedingungen abhängig. Darunter fallen beispielsweise Streckendaten wie die Höhe von Pässen, die erzielte Durchschnittsgeschwindigkeit, Steigungen und Gefälle, der Vereisungsgrad der Fahrbahnflächen, maximal zulässige Durchfahrtshöhen, Baustellen et cetera.

Diese Daten können beispielsweise einem Fahrzeug-Datenbussystem entnommen werden. Diesem wiederum können die Daten von im Fahrzeug eingebauten Neigungssensoren, Tachometer und anderen Sensoreinrichtungen bereitgestellt werden.

Dem vorliegenden Prinzip liegt die Idee zugrunde, dass das Navigationssystem des Fahrzeugs selbst Fahrzeug- oder Strecken-Daten erfasst und aufbereitet und die derart erfassten und aufbereiteten Daten an Navigationssysteme in anderen Fahrzeugen übermittelt.

Demnach sammeln die Navigationssysteme in den Fahrzeugen für sich und die anderen Navigationssystem Fahrzeugdaten oder Streckendaten, aus denen beispielsweise Stauinformationen abgeleitet werden können, und stellen diese den anderen Navigationssystemen zur Verfügung. Das Navigationssystem empfängt wiederum diese von anderen Navigationssystemen in anderen Fahrzeugen bereitgestellten, wegabhängigen, verkehrsabhängigen, umweltabhängigen oder topographieabhängigen Informationen und kann somit im Rahmen einer Routenplanung dem Fahrer zuverlässige und aktuelle Informationen darüber geben, welche Route, die zum gewünschten Ziel führt, die momentan zeitgünstigste oder verbrauchsgünstigste Route ist.

Das beschriebene System kann somit völlig unabhängig von ortsfest installierten Staumeldern arbeiten und ist auch nicht auf die manuelle Übermittlung von Stauinformationen von anderen Fahrern, beispielsweise über Funk oder Telefon, angewiesen.

Das beschriebene Navigationssystem ist demnach insbesondere für dünn besiedelte Gebiete und/oder Gebiete mit schwacher Infrastruktur geeignet. Insbesondere ist der Einsatz des Navigationssystems in Entwicklungsländern vorgesehen.

Die Fahrzeugdaten und/oder topographischen Daten umfassen bevorzugt die Momentangeschwindigkeit und/oder die Durchschnittsgeschwindigkeit des Fahrzeuges, in dem das Navigationssystem eingebaut ist, und die Zahlenwerte sind dementsprechend geschwindigkeitsabhängige Werte.

Ist die Durchschnittsgeschwindigkeit oder die Momentangeschwindigkeit beispielsweise sehr gering, so kann davon ausgegangen werden, dass sich das Fahrzeug momentan in einem Verkehrsstau befindet.

Da über die elektronischen Bussysteme in modernen Fahrzeugen eine Vielzahl von Informationen beispielsweise über Motor, Getriebe, Stoßdämpfer, Neigung et cetera erfasst und gesammelt werden, können diese bevorzugt dazu benutzt werden, Informationen über die Straßenlage weiter zu geben, beispielsweise über die Beschaffenheit des Straßenbelages, die Eignung für Gefahrguttransporte oder Transporte besonders zerbrechlicher oder schockempfindlicher Güter et cetera.

Die Auswerteeinheit kann beispielsweise bei zügigem Vorankommen des Fahrzeugs im Verkehrsfluß die zurückgelegte Teilstrecke mit einer positiven Geschwindigkeitsmarke versehen. Bei stockendem Verkehr hingegen wird mit einem entsprechend negativen Wert dieser zähfließende Verkehr dokumentiert. Die Auswerteeinheit ist dabei bevorzugt so ausgelegt, dass Ruhezeiten, Tankstops etc. entsprechend berücksichtigt werden. Als Start- und Zielpunkt von Weg-Intervallen kommen beispielsweise Knoten in einer elektronischen Landkarte, die sich durch Kreuzungen oder Abzweigungen in Hauptverbindungsstraßen ergeben, oder Hauptstädte in Frage.

Weiter bevorzugt wird der einem zurückgelegten Weg-Intervall zugeordnete Geschwindigkeitswert mit einem Zeitstempel versehen und so an die Navigationssysteme in den weiteren Fahrzeugen übermittelt. Mit Hilfe des Zeitstempels ist es möglich, unterschiedliche Gut- und Schlechtmarken, die von anderen Fahrzeugen an das vorliegende Navigationssystem übermittelt werden, anhand ihrer Aktualität zu gewichten und/oder ältere Informationen durch neuere Informationen zu ersetzen. Außerdem können beispielsweise Verfallszeiten festgelegt werden, nach denen übermittelte Informationen wertlos geworden sind. Weiterhin können Trends ermittelt werden, ob ein Stau in seiner Länge noch zunimmt oder sich bereits wieder auflöst.

Die Auswerteeinheit ordnet den geschwindigkeitsabhängigen Wert bevorzugt einem Wegstück auf einer elektronischen Landkarte zu.

Somit können, um eine Routenplanung von einem Startpunkt zu einem Zielpunkt durchzuführen, problemlos mehrere, jeweils mit geschwindigkeitsabhängigen Werten versehene Teilstücke zu einer bevorzugten Route zusammengesetzt werden.

Gemäß einer bevorzugten Ausführungsform der Erfindung ist ein Mittel zur Positionsbestimmung des Fahrzeugs vorgesehen und zur Übermittlung der Position des Fahrzeugs mit der Übermittlungseinheit gekoppelt. Die Positionsbestimmung kann beispielsweise mit einem globalen Satellitenpositioniersystem, dem sogenannten GPS, erfolgen. Sie erleichtert die Zuordnung der erfassten Daten zu einem bestimmten Teilstück auf einer elektronischen Landkarte.

Zur Eingabe eines gewünschten Fahrzieles ist das Navigationssystem bevorzugt mit einem Eingabegerät ausgestattet. Das Eingabegerät ist zur ergonomischen Bedienung durch den Fahrzeugführer bevorzugt als Multifunktionstaster ausgebildet.

Die Ausgabeeinheit umfasst bevorzugt eine graphische Anzeige. Mittels dieser graphischen Anzeige können von anderen Fahrzeugen übermittelte, geschwindigkeitsabhängige Werte beispielsweise farblich codiert auf einer elektronischen Landkarte dargestellt werden, um dem Fahrer einen schnellen Überblick über die aktuelle Verkehrslage und Stau-Situation geben zu können.

Das Fahrzeug, in dem das Navigationssystem vorgesehen ist, ist bevorzugt ein Nutzfahrzeug. Insbesondere bei Nutzfahrzeugen kommt das vorliegende Prinzip vorteilhaft zur Geltung, da sich diese normalerweise auch in Gebieten mit schwacher Infrastruktur unter Einhaltung von Liefer- und Abholterminen bewegen müssen.

Selbstverständlich ist das Prinzip auch im Personentransport mit Vorteil anwendbar, beispielsweise bei Taxi-Verbänden, Omnibussen et cetera.

Die Übermittlungseinheit und die Empfangseinheit sind bevorzugt für Satellitenfunk ausgelegt. Somit ist die Datenübertragung unabhängig von einem lokal vorhandenen Mobilfunknetz gewährleistet. Alternativ oder zusätzlich zu einem Satellitenfunkmodul kann das Navigationssystem auch ein Mobilfunk-Send- und Empfangsmodul umfassen.

Weitere Einzelheiten und vorteilhafte Ausgestaltungen der Erfindung ergeben sich aus den Unteransprüchen.

Die Erfindung wird nachfolgend an mehreren Ausführungsbeispielen anhand der Zeichnungen näher erläutert.

Es zeigen:
- Figur 1: ein erstes Ausführungsbeispiel eines von mehreren Navigationssystemen gebildeten Netzwerks mit Zentralstruktur,
- Figur 2: ein zweites Ausführungsbeispiel eines von mehreren Navigationssystemen gebildeten Netzwerkes mit dezentraler Struktur,
- Figur 3: ein Beispiel einer vereinfachten, graphischen Darstellung einer elektronischen Landkarte, bei der Teilstücke gemäß vorliegendem Prinzip bezüglich des Verkehrsflusses bewertet sind, und
- Figur 4: ein Ausführungsbeispiel eines erfindungsgemäßen Navigationssystems anhand eines stark vereinfachten Blockschaltbildes.

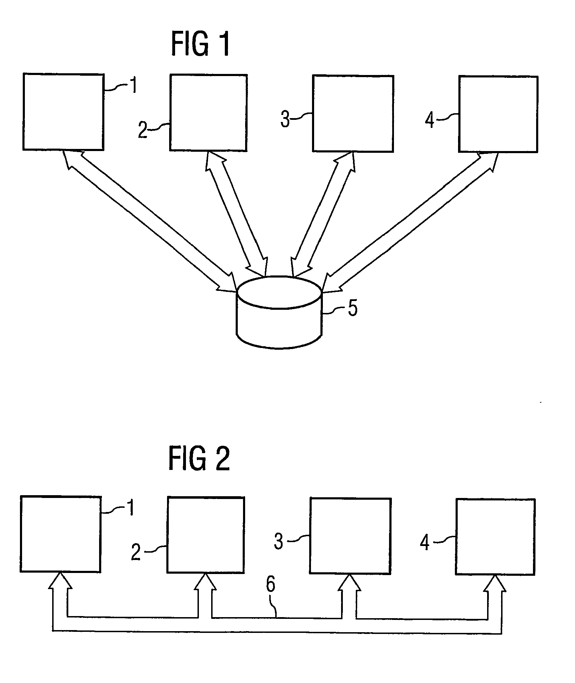

Figur 1 zeigt anhand eines vereinfachten Blockschaltbildes das Prinzip des erfindungsgemäßen Navigationssystems am Beispiel einer zentralisierten Netzwerkstruktur. Es sind beispielhaft vier Navigationssysteme 1, 2, 3, 4 vorgesehen, die jeweils in unterschiedlichen Fahrzeugen eingebaut sind. Die Navigationssysteme 1 bis 4 sind jeweils über einen bidirektionalen Übertragungskanal mit einem Zentralserver 5 gekoppelt. Die bidirektionalen Übertragungskanäle sind dabei bevorzugt als Satellitenfunkverbindungen ausgeführt.

Der Zentralserver 5 sammelt von den Navigationssystemen 1 bis 4 Topographie- und Fahrzeugdaten oder davon abgeleitete Daten, nämlich die Durchschnittsgeschwindigkeit, mit der sich das Fahrzeug bewegt. Diese Informationen werden dem Fahrzeug-Navigationssystem von einem Datenbus des Fahrzeugs bereitgestellt. Dabei werden lediglich die den zurückgelegten Weg-Intervallen jeweils zugeordneten aktuellen Werte, die geschwindigkeitsabhängig sind, erfasst und ausgewertet. Diese werden miteinander und mit einer im Zentralserver 5 abgelegten elektronischen Landkarte verknüpft. Dabei werden die geschwindigkeitsabhängigen Werte jeweils mit einem Zeitstempel versehen gespeichert.

Wird nun von einem der Navigationssysteme 1 bis 4 eine Anfrage über einen möglichst zeitgünstigen Weg von einem Startpunkt A zu einem Zielpunkt B vom Zentralserver 5 abgefragt, so stellt dieser die entsprechenden Daten auf Grundlage der übermittelten Verkehrssituationen zusammen und zum Abruf durch das anfragende Navigationssystem bereit. Somit können Verkehrsstauungen, baustellenbedingte Straßensperrungen, gesperrte Gebirgspässe et cetera aktuell berücksichtigt werden, ohne dass hierfür ortsfeste Staumelder erforderlich sind.

Dem vorliegenden Prinzip entspricht es demnach, dass die Navigationssysteme, die eine mit der aktuellen Verkehrssituation gewichtete Routenplanung durchführen können, die dieser Routenplanung zugrundeliegenden Informationen über das Verkehrsaufkommen selbst sammeln. Weiter entspricht es dem vorliegenden Prinzip, dass dieses um so besser arbeitet, je mehr Fahrzeuge an dem beschriebenen Netzwerk gemäß Figur 1 beteiligt sind und mitwirken.

Das Vorhandensein eines Zentralservers 5 mit einer zentralen Datenbank zum Ablegen der erfassten oder davon abgeleiteten Daten, die von den unterschiedlichen Navigationssystemen 1 bis 4 bereitgestellt werden, ist gemäß vorliegendem Prinzip nicht zwingend erforderlich. Alternativ kann, wie in Figur 2 gezeigt, ein dezentrales Netzwerk 6 vorgesehen sein, welches die Navigationssysteme 1 bis 4 bidirektional miteinander koppelt. Die bereitzustellende Rechenleistung sowie der erforderliche Speicher zum Sammeln und Verknüpfen der von den unterschiedlichen Navigationssystemen bereitgestellten Daten ist dabei mit Vorteil auf die verschiedenen Navigationssysteme 1 bis 4 verteilt.

Somit kann auf die Einrichtung und Pflege eines Zentralservers mit Vorteil verzichtet werden. Die Navigationssysteme 1 bis 4 bilden somit ein selbstlernendes System, welches in der Lage ist, auf die aktuelle Verkehrslage, die es selbst erfasst, zu reagieren und beteiligte Fahrzeuge, die auch selbst Informationen sammeln, entsprechend über wenig befahrene Routen zu lenken.

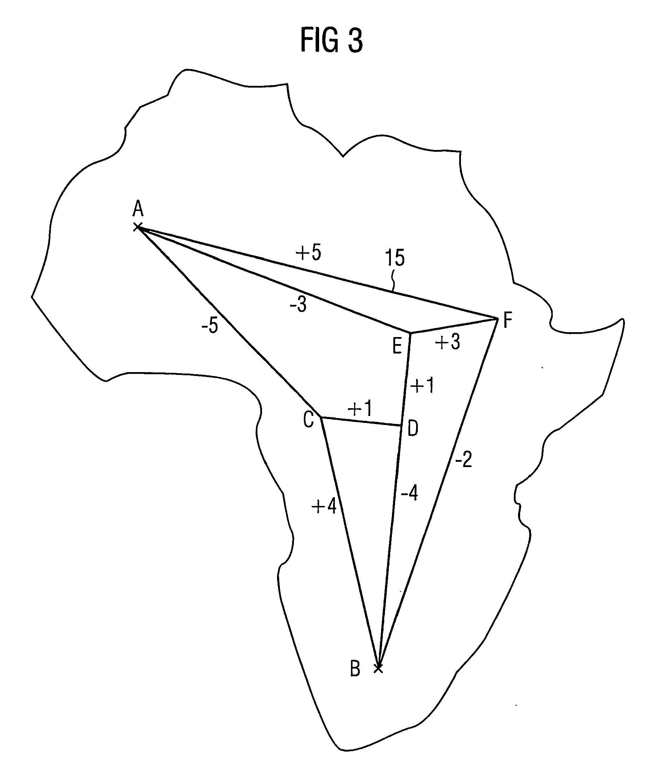

Figur 3 zeigt ein Ausführungsbeispiel einer elektronischen Landkarte, die gemäß dem vorliegenden Prinzip mit verkehrsflussabhängigen Werten gewichtete Teilstrecken umfasst.

Im Einzelnen zeigt Figur 3 eine Landkarte mit einem Startpunkt A, einem Zielpunkt B, Knoten C, D, E, F sowie Kanten 15, welche die Knoten miteinander verbinden. Die Kanten 15 repräsentieren dabei Weg-Intervalle, das heißt Straßenabschnitte. Den Straßenabschnitten ist jeweils ein Wert zugeordnet, der die aktuelle Verkehrssituation, das heißt die aktuellen Verkehrsbedingungen auf diesem Straßenabschnitt, repräsentiert. Ein positiver Zahlenwert entspricht dabei einer gut befahrbaren Strecke, während ein negativer Zahlenwert schlechte Verkehrsbedingungen, beispielsweise einen Stau oder eine Straßensperrung, bedeutet. Die geschwindigkeitsabhängigen Werte, die vorliegend in einem Intervall von -5 bis +5 liegen, setzen sich dabei aus einer Vielzahl von geschwindigkeitsabhängigen Werten zusammen, die jeweils von einem oder von mehreren Navigationssystemen übermittelt worden sind.

In einem Abfragemodus, in dem der Fahrer Start- und Zielpunkt A, B festlegt, kann das Navigationssystem aufgrund der abgelegten, elektronischen Karte mit dem von aktuellen Verkehrsinformationen bewerteten Teilstücken dem Fahrer eine momentan verkehrsgünstigste Route vom Startpunkt A zum Zielpunkt B berechnen und optisch ausgeben. Dabei wird die Häufigkeit und die Aktualität von geschwindigkeitsabhängigen Werten mit hohem Zahlenwert einen ökonomischen und verkehrsgünstigen Weg anzeigen. Das Sammeln und Aufbereiten der Daten kann dabei je nach verwendetem Netzwerkprinzip zentral oder dezentral erfolgen.

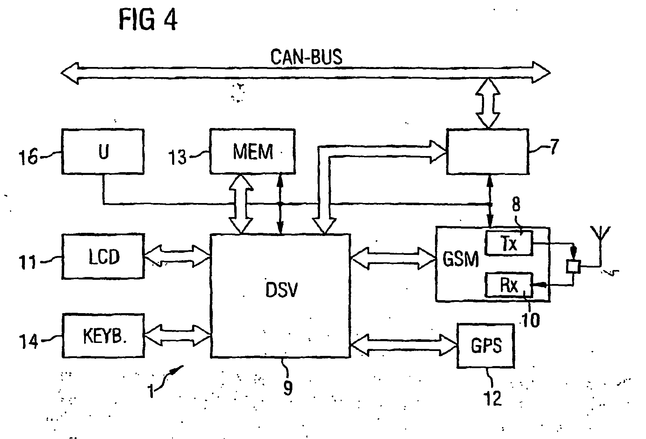

Figur 4 zeigt ein vereinfachtes Blockschaltbild eines erfindungsgemäßen Navigationssystems 1 für ein Nutzfahrzeug. Dieses umfasst eine Auswerteeinheit 7 zur Erfassung und Aufbereitung von Topographie- und Fahrzeugdaten, eine Übermittlungseinheit 8 zur Übermittlung der erfassten oder davon abgeleiteten Daten an Navigationssysteme 2 bis 4 in weiteren Fahrzeugen, welche über eine Verarbeitungseinheit 9 bidirektional mit der Auswerteeinheit 7 gekoppelt ist, eine Empfangseinheit 10 zum Empfang von Daten von Navigationssystemen 2 bis 4 in weiteren Fahrzeugen, sowie eine Ausgabeeinheit 11 zur Ausgabe der verknüpften und aufbereiteten Daten, welche mit der Verarbeitungseinheit 9 gekoppelt sind. Die Verarbeitungseinheit 9 ist dabei ausgelegt zur Verknüpfung und Aufbereitung der von den Navigationssystemen in weiteren Fahrzeugen 2 bis 4 bereitgestellten oder davon abgeleiteten Daten. Die Auswerteeinheit 7 ist zur Erfassung von Fahrzeugdaten, wie beispielsweise der Durchschnittsgeschwindigkeit, mit einem Datenbus-System des Fahrzeugs gekoppelt, vorliegend mit einem CAN-BUS.

Alternativ könnte das Fahrzeug-Bus-System auch ein MOST oder eine K-Line sein. Die Auswerteeinheit 7 sammelt die für das Navigationssystem relevanten Fahrzeugdaten und stellt diese vorverarbeitet der Verarbeitungseinheit 9 zur Verfügung. Die Verarbeitungseinheit 9, welche programmierbar ausgeführt ist, ist weiterhin zur Ortsbestimmung bidirektional mit einem GPS-Modul 12 und einem Speicher 13 gekoppelt. Weiterhin ist eine Stromversorgungseinheit 16 vorgesehen, welche die Auswerteeinheit 7, die Verarbeitungseinheit 9, das Funkmodul 8, 10 sowie den Speicher 13 mit einer Versorgungsspannung versorgt. Zu seiner Stromversorgung ist das Bordspannungsmodul 16 mit der Fahrzeugbatterie oder dem Bordspannungsnetz verbunden. Weiterhin ist ein Eingabegerät 14 zur Eingabe von Startpunkt A und Zielpunkt B sowie weiterer Parameter und Vorgaben für die Routenberechnung durch den Fahrzeugführer gekoppelt. Die Kopplungen der einzelnen Module untereinander sind bevorzugt bidirektional und als Mehrleitersysteme oder Bus-Systeme ausgeführt. Die Anzeigeeinheit 11 stellt die gewünschte Route sowie die von anderen Navigationssystemen empfangene und vorverarbeitete Bewertung der einzelnen Streckenabschnitte aufgrund der aktuellen Verkehrssituation dar.

Ausgehend von Startpunkt A und Zielpunkt B berechnet die Verarbeitungseinheit 9 die zeitlich oder verbrauchsmäßig günstigste Verbindung vom Startpunkt A zum Zielpunkt B und berücksichtigt dabei weitere Vorgaben des Fahrzeugführers, beispielsweise notwendige Grenzübergänge oder andere vorgegebene Zwischenstationen, sogenannte Via-Stationen. Von der Übermittlungseinheit 8 werden die durchschnittliche Fahrzeuggeschwindigkeit, die von der Auswerteeinheit 7 erfasst wird, sowie die vom GPS-System 12 bereitgestellte, aktuelle Position des Fahrzeuges an andere Navigationssysteme 2 bis 4 gesendet.

Mit dem beschriebenen Navigationssystem ist eine vom aktuellen Verkehrsaufkommen abhängige Routenplanung möglich, welche stets automatisch auf dem aktuellen Stand gehalten wird. Das beschriebene Navigationssystem ist dabei nicht auf die mit ortsfesten Staumeldern mögliche Stauerfassung beschränkt.

Mehrere Navigationssysteme vom vorgestellten Typ bilden demnach gemeinsam ein selbstlernendes System, wobei jedes Navigationssystem von allen oder ausgewählten Informationen, die andere Navigationssysteme aktuelle sammeln, profitiert.

Es liegt im Rahmen der Erfindung, dass nicht alle Navigationssysteme eines Fuhrparks mit der Auswerteeinheit zur Erfassung und Aufbereitung von Daten ausgerüstet sein müssen. Vielmehr könnte auch nur eine Teilmenge der Fahrzeuge eines Fuhrparks mit der Datensammlung befasst sein, während dann die Gesamtheit der Fahrzeuge von den gesammelten Daten profitieren kann. Je größer jedoch die Anzahl der wegabhängige Daten sammelnden Fahrzeuge ist, um so präziser und aktueller kann eine verkehrsaufkommensabhängige Routenplanung in den Fahrzeugen durchgeführt werden.

## Patentansprüche

1. Navigationssystem (1) für ein Fahrzeug, umfassend
- eine Auswerteeinheit (7) zur Erfassung und Aufbereitung von Fahrzeugdaten und/oder topographischen Daten,
- eine Übermittlungseinheit (8), die mit der Auswerteeinheit (7) gekoppelt ist, zur Übermittlung der von der Auswerteeinheit erfassten oder davon abgeleiteten Daten an Navigationssysteme (2, 3, 4) in weiteren Fahrzeugen,
- eine Empfangseinheit (10) zum Empfang von Fahrzeugdaten und/oder topographischen Daten oder davon abgeleiteten Daten von Navigationssystemen (2, 3, 4) in weiteren Fahrzeugen,
- eine Verarbeitungseinheit (9), die mit der Empfangseinheit (10) zur Verknüpfung und Aufbereitung der von den Navigationssystemen (2, 3, 4) in weiteren Fahrzeugen bereitgestellten Daten gekoppelt ist, und
- eine Ausgabeeinheit (11) zur Ausgabe der verknüpften und aufbereiteten Daten, die mit der Verarbeitungseinheit (9) gekoppelt ist,
**dadurch gekennzeichnet, dass**
die Auswerteeinheit (7) je einem zurückgelegten Weg-Intervall einen Zahlenwert zuordnet, der die aktuellen Verkehrsbedingungen auf diesem Weg-Intervall repräsentiert, wobei ein positiver Zahlenwert einer gut befahrbaren Strecke entspricht und ein negativer Zahlenwert schlechte Verkehrsbedingungen bedeutet.

2. Navigationssystem nach Anspruch 1, **dadurch gekennzeichnet, dass** die Fahrzeugdaten die Momentan- oder Durchschnittsgeschwindigkeit des Fahrzeugs umfassen und dass die Zahlenwerte geschwindigkeitsabhängige Werte sind.

3. Navigationssystem nach Anspruch 1 oder 2, **dadurch gekennzeichnet, dass** Informationen über die Straßenlage weitergegeben werden, insbesondere über die Beschaffenheit des Straßenbelags und die Eignung für Gefahrguttransporte oder Transporte besonders schockempfindlicher Güter.

4. Navigationssystem nach Anspruch 2, **dadurch gekennzeichnet, dass** die Auswerteeinheit (7) dem einem zurückgelegten Weg-Intervall zugeordneten, geschwindigkeitsabhängigen Wert einen zeitabhängigen Wert zuordnet und die Übermittlungseinheit (8) ausgebildet ist zur Übermittlung des von der ermittelten Geschwindigkeit abhängigen, mit einem Zeitstempel versehenen Wertes an die Navigationssysteme (2, 3, 4) in weiteren Fahrzeugen.

5. Navigationssystem nach einem der vorhergehenden Ansprüche, **dadurch gekennzeichnet, dass** die Ausgabeeinheit (11) eine graphische Anzeige umfasst.

6. Navigationssystem nach den Ansprüchen 2 und 5, **dadurch gekennzeichnet, dass** die geschwindigkeitsabhängigen Werte auf der Ausgabeeinheit (11) graphisch auf einer elektronischen Landkarte, insbesondere farblich codiert, dargestellt werden.

7. Navigationssystem nach einem der vorhergehenden Ansprüche, **dadurch gekennzeichnet, dass** ein Mittel zur Positionsbestimmung des Fahrzeugs (12) vorgesehen und zur Übermittlung der Position des Fahrzeugs mit der Übermittlungseinheit (8) gekoppelt ist.

8. Navigationssystem nach einem der vorhergehenden Ansprüche, **dadurch gekennzeichnet, dass** ein Eingabegerät (14) vorgesehen ist zur Eingabe eines gewünschten Fahrziels.

9. Navigationssystem nach einem der vorhergehenden Ansprüche, **dadurch gekennzeichnet, dass** das Fahrzeug ein Nutzfahrzeug ist.

10. Navigationssystem nach einem der vorhergehenden Ansprüche, **dadurch gekennzeichnet, dass** Übermittlungseinheit (8) und Empfangseinheit (10) für Satellitenfunk ausgelegt sind.

## Claims

1. Navigation system (1) for a vehicle, comprising
- an evaluation unit (7) for capturing and conditioning vehicle data and/or topographical data,
- a transmission unit (8), which is coupled to the evaluation unit (7), for sending the data captured by the evaluation unit or derived therefrom to navigation systems (2, 3, 4) in other vehicles,
- a reception unit (10) for receiving vehicle data and/or topographical data or data derived therefrom from navigation systems (2, 3, 4) in other vehicles,
- a processing unit (9) which is coupled to the reception unit (10) for the purpose of logically combining and conditioning the data provided by the navigation systems (2, 3, 4) in other vehicles, and
- an output unit (11) for outputting the logically combined and conditioned data, which is coupled to the processing unit (9),
**characterized in that**
the evaluation unit (7) assigns a respective covered path range a numerical value which represents the current traffic conditions over this path range, with a positive numerical value corresponding to a section on which driving is easy and a negative numerical value signifying poor traffic conditions.

2. Navigation system according to Claim 1,
**characterized in that**
the vehicle data include the current or average speed of the vehicle, and **in that** the numerical values are speed-dependent values.

3. Navigation system according to Claim 1 or 2,
**characterized in that**
information about the road situation is forwarded, particularly about the nature of the road covering and the suitability for transporting dangerous goods or transporting particularly shock-sensitive goods.

4. Navigation system according to Claim 2,
**characterized in that**
the evaluation unit (7) assigns a time-dependent value to the speed-dependent value associated with a covered path range, and the transmission unit (8) is designed to send the time-stamped value which is dependent on the ascertained speed to the navigation systems (2, 3, 4) in other vehicles.

5. Navigation system according to one of the preceding claims,
**characterized in that**
the output unit (11) comprises a graphical display.

6. Navigation system according to Claims 2 and 5,
**characterized in that**
the speed-dependent values are shown on the output unit (11) graphically on an electronic map, particularly in color-coded form.

7. Navigation system according to one of the preceding claims,
**characterized in that**
a means for finding the position of the vehicle (12) is provided and is coupled to the transmission unit (8) for the purpose of sending the position of the vehicle.

8. Navigation system according to one of the preceding claims,
**characterized in that**
an input unit (14) is provided for inputting a desired travel destination.

9. Navigation system according to one of the preceding claims,
**characterized in that**
the vehicle is a commercial vehicle.

10. Navigation system according to one of the preceding claims,
**characterized in that**
the transmission unit (8) and the reception unit (10) are designed for satellite radio.

## Revendications

1. Système de navigation (1) pour véhicule, comprenant
- une unité d'évaluation (7) permettant la détection et la préparation de données relatives au véhicule et / ou de données topographiques,
- une unité de transmission (8), qui est couplée à l'unité d'évaluation (7) et qui permet de transmettre les données détectées par l'unité d'évaluation, ou des données qui en sont déduites, à des systèmes de navigation (2, 3, 4) d'autres véhicules,
- une unité de réception (10) destinée à la réception de données relatives aux véhicules et / ou de données topographiques, ou de données qui en sont déduites, provenant de systèmes de navigation (2, 3, 4) d'autres véhicules,
- une unité de traitement (9), qui est couplée à l'unité de réception (10) pour l'enchaînement et la préparation des données mises à disposition par les systèmes de navigation (2, 3, 4) d'autres véhicules, et
- une unité de sortie (11), qui est couplée à l'unité de traitement (9), pour l'édition des données enchaînées et préparées,
**caractérisé par le fait que**
l'unité d'évaluation (7) affecte une valeur numérique à chaque section d'itinéraire parcourue, la dite valeur numérique représentant en temps réel les conditions de la circulation sur cette section d'itinéraire et une valeur numérique positive correspondant à une section facile à parcourir et une valeur numérique négative indiquant des conditions de circulation difficiles.

2. Système de navigation selon la revendication 1, **caractérisé par le fait que** les données relatives au véhicule comprennent la vitesse instantanée et la vitesse moyenne du véhicule et que les valeurs numériques sont des valeurs dépendant de la vitesse.

3. Système de navigation selon la revendication 1 ou 2, **caractérisé par le fait que** des informations concernant l'état des routes, notamment, la qualité du revêtement des routes et leur aptitude aux transports de biens dangereux ou aux transports de biens sensibles aux chocs, sont retransmises.

4. Système de navigation selon la revendication 2, **caractérisé par le fait que** l'unité d'évaluation (7) affecte une valeur dépendant de la durée à une valeur dépendant de la vitesse correspondant à une section d'itinéraire parcourue et que l'unité de transmission (8) est conçue pour la transmission, aux systèmes de navigation (2, 3, 4) d'autres véhicules, de la valeur, dotée d'un datage automatique, dépendant de la vitesse détectée.

5. Système de navigation selon l'une des revendications précédentes, **caractérisé par le fait que** l'unité de sortie (11) comprend un affichage graphique.

6. Système de navigation selon la revendication 2 et 5, **caractérisé par le fait que** les valeurs dépendant de la vitesse sont représentées graphiquement sur l'unité de sortie (11) sur une carte topographique électronique, notamment avec une codification colorée.

7. Système de navigation selon l'une des revendications précédentes, **caractérisé par le fait qu'**il est prévu un moyen pour la détermination de la position du véhicule (12) et que le dit moyen est couplé à l'unité de transmission (8) pour la transmission de la position du véhicule.

8. Système de navigation selon l'une des revendications précédentes, **caractérisé par le fait qu'**il est prévu un appareil de saisie (14) pour la saisie d'une destination souhaitée.

9. Système de navigation selon l'une des revendications précédentes, **caractérisé par le fait que** le véhicule est un véhicule utilitaire.

10. Système de navigation selon l'une des revendications précédentes, **caractérisé par le fait que** l'unité de transmission (8) et l'unité de réception (10) sont configurées pour la communication radio par satellites.
